Europäisches Patentamt

European Patent Office

Office européen des brevets

(19)

(11) Veröffentlichungsnummer: **0 365 105**

**A2**

## (12) EUROPÄISCHE PATENTANMELDUNG

(21) Anmeldenummer: 89250056.2

(22) Anmeldetag: 11.10.89

(51) Int. Cl.⁵: **F16J 15/32**

(30) Priorität: 17.10.88 DE 3835708

(43) Veröffentlichungstag der Anmeldung:
25.04.90 Patentblatt 90/17

(84) Benannte Vertragsstaaten:
AT BE DE FR GB IT LU NL

(71) Anmelder: MANNESMANN Aktiengesellschaft
Mannesmannufer 2
D-4000 Düsseldorf 1(DE)

(72) Erfinder: Jäger, Rolf
Talstrasse 27
D-7860 Schopfheim(DE)
Erfinder: Haldenwang, Rolf
Mühlstrasse 30
D-7121 Erligheim(DE)

(74) Vertreter: Meissner, Peter E., Dipl.-Ing. et al
Patentanwaltsbüro Meissner & Meissner,
Herbertstrasse 22
D-1000 Berlin 33(DE)

(54) Wellendichtring.

(57) Die Erfindung betrifft einen Wellendichtring aus einem elastomeren Material, der sich im Bereich des Außenumfanges in einem feststehenden Teil abstützt und die Welle mit einer umlaufenden Kontaktfläche berührt. Um diesen Dichtring hinsichtlich seiner Verschleißfestigkeit zu verbessern, wird vorgeschlagen, daß der in einer Aussparung des feststehenden Teiles angeordnete Wellendichtring einen viereckigen Dichtbereich (2) aufweist, dessen zur Welle (5) gerichtete Seite die Kontaktfläche (14) bildet und daß eine parallel zur Wellenachse (4) liegende entgegen den abzudichtenden Medium gerichtete, nasenförmige Verlängerung (3) vorgesehen ist. Im Betriebszustand ist der viereckige Dichtbereich (2) in Richtung des abzudichtenden Mediums hin geneigt.

EP 0 365 105 A2

## Wellendrichtring

Die Erfindung betrifft einen Wellendichtring gemäß dem Gattungsbegriff des Hauptanspruches.

Die EP 0 082 239 nimmt auf einen vergleichbaren Wellendichtring Bezug. Dieser Wellendichtring in Form eines Radialdichtringes weist ein trompetenähnlich ausgebildetes Dichtelement aus einem polymeren Werkstoff auf, das im Bereich des Außenumfanges in einem Haltering verankert ist und das die Welle mit einer umlaufenden Kontaktfläche berührt. Die Lebensdauer eines solchen Radialwellendichtringes ist aufgrund der hohen Eigenspannung und der zusätzlich durch das abzudichtende Medium hervorgerufenen Vorspannungen stark eingeschränkt. Dies gilt insbesondere beim Einsatz für trockenlaufende Maschinen. Nachteilig ist außerdem, daß durch die Art der Anordnung des Dichtelementes ein großer ringförmiger Totraum gebildet wird.

Aufgabe der Erfindung ist es, einen einfach herzustellenden Wellendichtring zur Abdichtung rotierender Wellen, insbesondere für Rotorwellen von trockenlaufenden Flügelzellenmaschinen zu schaffen, der besonders verschleißarm und dessen Vorspannung einstellbar ist.

Diese Aufgabe wird durch die kennzeichnenden Merkmale des Hauptanspruches gelöst. Vorteilhafte Weiterbildungen sind Bestandteil von Unteransprüchen.

Im Vergleich zu den bisher bekannten Wellendichtringen weist der erfindungsgemäße einteilig ausgebildete Wellendichtring einen im Querschnitt regelmäßigen viereckigen Dichtbereich auf, an den sich eine nasenförmige Verlängerung anschließt, die parallel zur Wellenachse liegt und entgegen dem abzudichtenden Medium gerichtet ist. Mit Hife dieser Verlängerung, die in eine entsprechende Ringnut der Aussparung des feststehenden Teiles einpaßbar ist, kann der Wellendichtring im Bereich des Außenumfanges radial in beiden Richtungen und axial in Richtung der nasenförmigen Verlängerung fixiert und gehalten werden. Um den Wellendichtring auch in der axialen Gegenrichtung zu fixieren, wird deshalb weiterbildend vorgeschlagen, im Bereich der Aussparung im feststehenden Teil stirnseitig eine Abdeckscheibe anzuordnen. Die Befestigung einer solchen Abdeckscheibe am feststehenden Teil kann in einfacher Weise durch Schrauben erfolgen. Alternativ wäre es auch möglich, den Wellendichtring im Bereich der nasenförmigen Verlängerung mit einem elastisch verformbaren hervorspringenden Teil zu versehen, das beim Einschieben des Wellendichtringes in die Ringnut in eine dort entsprechend angeordnete Ausbuchtung springen könnte. Dieser Vorschlag hat aber den Nachteil, daß der Wellendichtring nur sehr schwierig wieder aus der Ringnut herausgezogen werden könnte. Zur Überwindung dieses Problems wird weiterbildend vorgeschlagen, in der Aussparung im Bereich der nasenförmigen Verlängerung ein elastisches Spannelement anzuordnen. Dieser Vorschlag hat den Vorteil, daß gegenüber dem nur formschlüssigen Einpassen des Wellendichtringes in die entsprechende ausgebildete Aussparung, durch das Spannelement der Wellendichtring im Bereich der nasenförmigen Verlängerung radial gegen das feststehende Teil gedrückt wird.

Im Einbauzustand ist der viereckige Dichtbereich des Wellendichtringes unverformt, so daß die Kontaktfläche und die Außenfläche parallel zur Wellenachse liegen. Im Betriebszustand, d. h. mindestens nach einem entsprechenden Warm-Kaltzyklus schrumpft das elastomere Material, und zwar im Außenumfang stärker als auf der Innenseite. Dies hat zur Folge, daß der viereckige Dichtbereich in Richtung des abzudichtenden Mediums hin sich neigt und mit ihr die beiden ringförmigen Flächen, d. h. die Außenfläche und die Kontaktfläche. Durch die schrägliegende Außenfläche bildet sich nunmehr in der Aussparung des feststehenden Teiles ein kleiner Totraum, so daß das abzudichtende Gas druckmäßig dort wirksam werden kann. Die sich durch den Gasdruck ergebenden Kräfte führen zu einer Erhöhung der Anpreßkräfte. Durch Variation der Geometrie des viereckigen Dichtbereiches des Wellendichtringes und der Aussparung können somit die Anpreßkräfte eingestellt werden. Damit dieser Mechanismus auch bei Anbringung einer Abdeckscheibe wirksam werden kann, muß im Einbauzustand zwischen Wellendichtring und Abdeckscheibe ein Spalt verbleiben. Die erforderliche Eigenspannung des Wellendichtringes wird durch die Wahl des Werkstoffes und des Querschnittes erzeugt. Die Größe dieser Eigenspannung kann ebenfalls innerhalb einer gewissen Bandbreite eingestellt werden. Als Werkstoff wird Polytetrafluoräthylen verwendet, vorzugsweise als Compoundmaterial auf PTFE-Basis. Dieser Werkstoff zeichnet sich durch gute Trockenlaufeigenschaften und langen Standzeiten aus. Die Kontaktfläche kann je nach Anwendungsfall und Druckgefälle glattflächig oder profiliert ausgebildet sein. Die nasenförmige Verlängerung sollte mindestens 1 mm lang sein, vorzugsweise 3 mm. Diese Länge garantiert einen festen Sitz in der dafür vorgesehenen Aussparung des feststehenden Teiles und ist auch ausreichend für die alternative Anordnung eines elastischen Spannelementes.

Der vorgeschlagene Wellendichtring weist folgende Vorteile auf.

- Die Eigenvorspannung ist durch die Einbaulage und durch die Querschnittsgröße des Dichtringes variierbar.

- Der Dichtring wird im wesentlichen durch den Druck des abzudichtenden Gases vorgespannt.
- Die Anpreßkraft ist durch die Variation der Aussparung und des Querschnittes des Wellendichtringes einstellbar.
- Der sich im Betriebszustand einstellende Totraum zwischen der Außenfläche des Wellendichtringes und der Aussparung ist klein, so daß im Falle von Flügelzellenmaschinen die Kurzschlußverluste gering sind.
- Das Verschleißvolumen des Wellendichtringes ist in einem größeren Umfang frei wählbar.
- Eine betriebssichere trockenlaufende Abdichtung ist auch für größere Durchmesser, d. h. auch für größere Umfangsgeschwindigkeiten möglich.
- Die Standzeit wird gegenüber herkömmlichen Radialwellendichtringen um den Faktor 10 erhöht.

In der Zeichnung wird anhand eines Ausführungsbeispieles der erfindungsgemäße Wellendichtring näher erläutert.

Es zeigen:

Figur 1 einen erfindungsgemäßen Wellendichtring im Einbauzustand

Figur 2 einen erfindungsgemäßen Wellendichtring im Betriebszustand

Figur 3 wie Figur 1, jedoch mit Abdeckscheibe und Spannelement

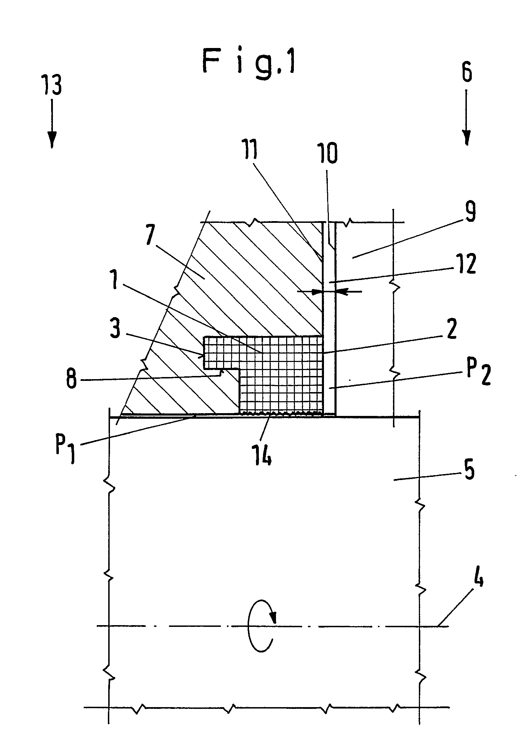

In Figur 1 ist der erfindungsgemäße Wellendichtring 1 im Einbauzustand dargestellt. Er ist einteilig ausgebildet und weist einen im Querschnitt regelmäßigen viereckigen Dichtbereich 2 auf, an den sich eine nasenförmige Verlängerung 3 anschließt. Diese Verlängerung 3 liegt parallel zur Achse 4 der sich drehenden Welle 5 und entgegengesetzt zur abzudichtenden Seite 6. Der Wellendichtring 1 ist in einer entsprechenden Aussparung des feststehenden Teiles 7 angeordnet. Dieses hier nur skizzenhaft dargestellte feststehende Teil 7 kann Teil eines Gehäuses, eines Deckels oder eines Flansches sein. Durch die Einpassung der nasenförmigen Verlängerung 3 des Dichtringes 1 in eine Ringnut 8 der Aussparung wird der Dichtring radial in beiden Richtungen und axial in Richtung der nasenförmigen Verlängerung 3 fixiert.

Für den Anwendungsfall einer Flügelzellenmaschine ist das hier dargestellte Wellenstück 5 die Rotorwelle, die hier nicht dargestellte Schlitze aufweist, in denen die einzelnen Schieber 9 radial angeordnet sind. Zwischen der äußersten Schieberkante 10 und der Stirnseite 11 des feststehenden Teiles 7 muß ein Spiel 12 verbleiben, damit zwischen beiden kein dauernder Kontakt entsteht, der zu unzulässigen Temperaturen infolge der Reibung und damit zur Zerstörung der Schieber 9 führen würde. Dieser Spalt 12 muß gasdicht gegenüber der Außenseite 13 abgedichtet werden. In dem Spalt 12 herrscht der Zellendruck $p_2$ und auf der Außenseite 13 der Druck $p_1$. Das sich daraus ergebende Druckgefälle $p_2 - p_1$ muß durch den Wellendichtring 1 abgedichtet werden. Im Einbauzustand liegt die Kontaktfläche 14 parallel zur Achse 4 der Welle 5 und weist in diesem Ausführungsbeispiel eine profilierte Oberfläche auf.

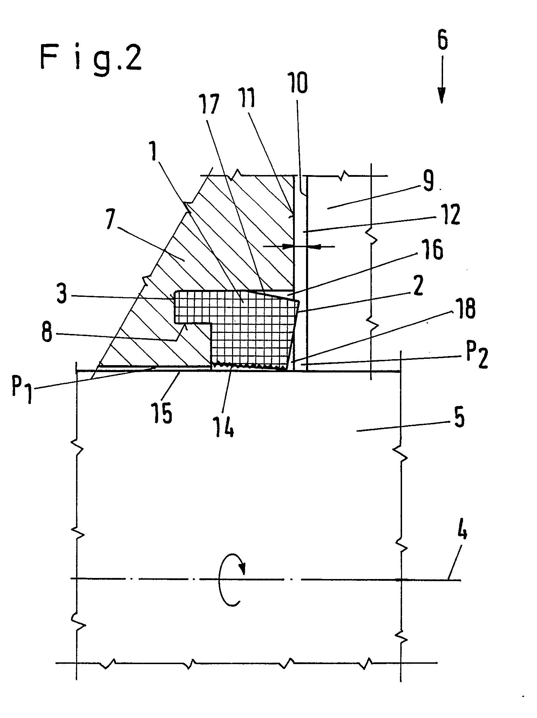

Figur 2 zeigt den gleichen erfindungsgemäßen Wellendichtring 1 im Betriebszustand, d. h. mindestens nach einem Warm-Kaltzyklus, wobei für gleiche Teile gleiche Bezugszeichen verwendet wurden. Durch den Warm-Kaltzyklus schrumpft werkstoffbedingt der Wellendichtring 1, und zwar im Außenumfang stärker als auf der Innenseite. Dadurch neigt sich der viereckige Dichtbereich 2 des Wellendichtringes 1 in Richtung der abzudichtenden Seite 6 hin. Diese Schieflage erzeugt bezüglich der Kontaktfläche 14 einen Anpreßdruck auf die Oberfläche 15 der Welle 5. Diese Kraft wird noch verstärkt, da durch die Schieflage sich im Außenbereich des Wellendichtringes 1 ein Totraum 16 gebildet hat. In diesem Totraum 16 wirkt der gleiche Zellendruck $p_2$ wie im Spalt 12. Teilt man die senkrecht auf der Außenfläche 17 stehende Gesamtkraft auf, so ergibt sich entsprechend dem Kräfteparallelogramm eine in radialer Richtung wirkende große Kraftkomponente und eine kleinere Kraftkomponente in Richtung der nasenförmigen Verlängerung 3. Die radial nach unten wirkende Kraftkomponente von der Außenfläche 17 wird aber gemindert durch die radial nach oben wirkende Kraft auf der Stirnfläche 18 des Wellendichtringes 1. Die verbleibende nach unten wirkende Kraft verstärkt die Anpassung der Kontaktfläche 14 auf die Welle 5.

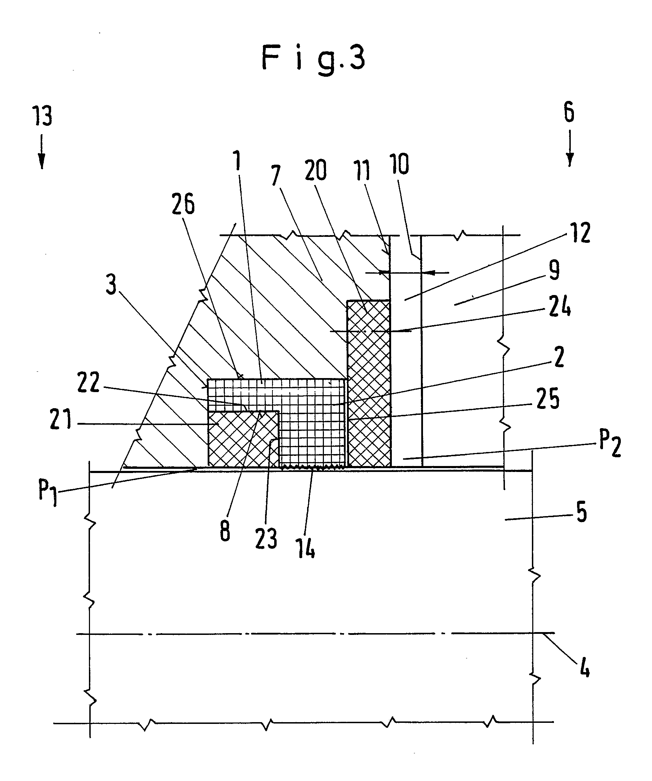

In Figur 3 ist ein weiteres Ausführungsbeispiel dargestellt. Damit bei der axialen Bewegung der Welle 5 in Richtung des abzudichtenden Mediums hin der Wellendichtring 1 nicht aus der Aussparung des feststehenden Teiles 7 gezogen werden kann, ist stirnseitig im feststehenden Teil 7 eine Abdeckscheibe 20 angeordnet. Diese wird mit hier nicht näher dargestellten Schrauben 24 am feststehenden Teil 7 befestigt. Um die Schrumpfung des viereckigen Dichtbereiches 2 des Wellendichtringes 1 nicht zu behindern, muß im Einbauzustand zwischen Abdeckscheibe 20 und dem stirnseitigen Ende des Wellendichtringes 1 ein Spiel 25 verbleiben. Unabhängig von der Anordnung einer Abdeckscheibe 20 kann statt der entsprechend ausgebildeten Ringnut 8 (siehe Figuren 1 + 2) für die Einpassung der nasenförmigen Verlängerung 3 auch ein elastisches Spannelement 21 in der Aussparung des feststehenden Teiles 7 angeordnet werden. Diese Variante hat den Vorteil, daß durch das Spannelement 21 die nasenförmige Verlängerung 3 radial an die innere Umfangsfläche 26 der Aussparung gedrückt wird. Bei einem entsprechend ausgebildeten Spannelement 21 kann dieses radiale Andrücken so wirksam sein, daß auf die Abdeckscheibe 20 verzichtet werden kann, da je nach Flächendruck und Reibungsverhältnissen auch die axiale Verschiebung des Wellendichtringes 1 in Richtung des abzudichtenden Mediums hin damit verhindert werden kann.

**Ansprüche**

1. Wellendichtring aus einem elastomeren Material zur Abdichtung rotierender Wellen, der sich im Bereich des Außenumfanges in einem feststehenden Teil abstützt und die Welle mit einer umlaufenden Kontaktfläche berührt,
**dadurch gekennzeichnet,**
daß der in einer Aussparung des feststehenden Teiles (7) angeordnete Wellendichtring (1) einteilig ausgebildet ist mit einem im Querschnitt regelmäßigen viereckigen Dichtbereich (2), dessen zur Welle (5) gerichtete Seite die Kontaktfläche (14) bildet und einer parallel zur Wellenachse (4) liegenden, entgegen dem abzudichtenden Medium gerichteten, nasenförmigen Verlängerung (3), wobei im Einbauzustand der Wellendichtring (1) so angeordnet ist, daß die die Kontaktfläche (14) bildende Seite des viereckigen Dichtbereiches (2) parallel zur Wellenachse (4) liegt und im Betriebszustand der viereckige Dichtbereich (2) in Richtung des abzudichtenden Mediums hin geneigt ist.

2. Wellendichtring nach Anspruch 1,
**dadurch gekennzeichnet,**
daß die nasenförmige Verlängerung (3) im Außenbereich des Wellendichtringes (1) angeordnet ist.

3. Wellendichtring nach den Ansprüchen 1 oder 2,
**dadurch gekennzeichnet,**
daß die nasenförmige Verlängerung (3) einen regelmäßigen viereckigen Querschnitt aufweist.

4. Wellendichtring nach Anspruch 1,
**dadurch gekennzeichnet,**
daß das elastomere Material Polltetrafluoräthylen ist.

5. Wellendichtring nach Anspruch 1,
**dadurch gekennzeichnet,**
daß das elastomere Material ein Compound-Material auf PTFE-Basis ist.

6. Wellendichtring nach Anspruch 1,
**dadurch gekennzeichnet,**
daß die Kontaktfläche (14) glattflächig ausgebildet ist.

7. Wellendichtring nach Anspruch 1,
**dadurch gekennzeichnet,**
daß die Kontaktfläche (14) eine profilierte Oberfläche aufweist.

8. Wellendichtring nach den Ansprüchen 1 bis 3,
**dadurch gekennzeichnet,**
daß die Aussparung des feststehenden Teiles (7) eine für die Einpassung der nasenförmigen Verlängerung (3) geeignete Ringnut (8) aufweist.

9. Wellendichtring nach den Ansprüchen 1 bis 3,
**dadurch gekennzeichnet,**
daß zum Klemmen des Wellendichtringes in der Aussparung des feststehenden Teiles (7) ein im Bereich der nasenförmigen Verlängerung (3) liegendes elastisches ringförmiges Spannelement (21) angeordnet ist.

10. Wellendichtring nach Anspruch 9,
**dadurch gekennzeichnet,**
daß das Spannelement (21) einen regelmäßigen viereckigen Querschnitt aufweist und mit seiner Umfangsfläche (22) und seiner dem Wellendichtring (1) zugewandten Stirnfläche (23) an den jeweiligen Flächen des Wellendichtringes (1) anliegt.

11. Wellendichtring nach den Ansprüchen 1, 8 und 9,
**dadurch gekennzeichnet,**
daß im Bereich der Aussparung des feststehenden Teiles (7) stirnseitig eine Abdeckscheibe (20) lösbar befestigt ist.

12. Wellendichtring nach Anspruch 11,
**dadurch gekennzeichnet,**
daß im Einbauzustand die Abdeckscheibe (20) zum Wellendichtring (1) einen Abstand aufweist.

13. Wellendichtring nach den Ansprüchen 1 bis 3,
**dadurch gekennzeichnet,**
daß die Länge der nasenförmige Verlängerung (3) mindestens 1 mm beträgt.

14. Wellendichtring nach Anspruch 1,
**dadurch gekennzeichnet,**
daß die Länge der Kontaktfläche (14) mindestens 3 mm beträgt.

F i g.1

Fig.2

# F i g.3